# EUROPEAN PATENT APPLICATION

(11) **EP 4 737 652 A2**
(43) Date of publication of application: **06.05.2026**
(21) Application number: 26166847.9
(22) Date of filing: 02.02.2023
(51) Int. Cl.: E02F 9/20

(54) **HYDROGEN-POWERED WORKING VEHICLE**

(30) Priority: 03.02.2022 GB 202201413
(62) Divisional of application: 23154587.2
(71) Applicant: J.C. Bamford Excavators Limited, Uttoxeter Staffordshire ST14 5JP (GB)
(72) Inventor: HARPER, Lee, Uttoxeter, ST14 5JP (GB); JAMES, Joseph, Uttoxeter, ST14 5JP (GB); JOHNSON, Noel, Uttoxeter, ST14 5JP (GB)
(74) Representative: McGeough, Gemma Ann

(57) **Abstract**

The present disclosure relates to hydrogen powered working vehicle. Advantageously, the hydrogen-powered working vehicle of the present disclosure is designed to enable existing chassis designs for diesel-powered working vehicles to be re-purposed for use in hydrogen powered working vehicles whilst still affording adequate lateral airflow to components of the hydrogen powered working vehicle.

## Description

### FIELD

The present disclosure relates to a hydrogen-powered working vehicle, in some embodiments a hydrogen-powered excavator.

### BACKGROUND

In recent years, there has been a drive to reduce dependence on fossil fuels and the harmful environmental implications associated with such fuels. Accordingly, there is a need for vehicles which are more environmentally friendly.

In the construction sector, working vehicles are typically exposed to harsh working environments and so need to be able to withstand impact and damage. This can make adopting new, environmentally friendly technology more difficult, particularly where new power systems are more vulnerable to damage than traditional diesel combustion engines and associated components.

The present disclosure seeks to overcome, or at least mitigate, one or more of the aforementioned problems.

### SUMMARY

According to a first aspect of the present disclosure, there is provided a hydrogen-powered working vehicle comprising a hydrogen fuel cell, a hydrogen storage unit for supplying hydrogen to the hydrogen fuel cell, a chassis configured to house the hydrogen storage unit, a working arm coupled to the chassis and a counterweight located proximal a rear of the chassis for counter-balancing the working arm, wherein the hydrogen storage unit is located inboard of the counterweight.

In other words, the storage unit is provided as a separate component to the counterweight.

Advantageously, by locating the hydrogen storage unit inboard of the counterweight, the hydrogen storage unit is at a position of maximum protection within the excavator, thereby reducing the susceptibility of this component to damage during use.

In exemplary embodiments, the working vehicle comprises a longitudinal axis.

In exemplary embodiments, the longitudinal axis intersects at least a portion of the hydrogen storage unit.

Advantageously, by positioning the hydrogen storage unit centrally within the chassis of the vehicle, the susceptibility of the hydrogen storage unit to damage can be further reduced since it is more common for collisions to occur at the corner portions of the excavator chassis.

In exemplary embodiments the hydrogen storage unit extends transversely across the chassis with respect to the longitudinal axis.

Advantageously, positioning the hydrogen storage unit transversely across the chassis helps to maximise the space available within the chassis.

In exemplary embodiments, the hydrogen storage unit is provided proximal to a rear of the chassis.

Advantageously, positioning the hydrogen storage unit at the rear of the chassis helps to further maximise the degree of protection afforded to this component, since the hydrogen storage unit will be provided in close proximity to the durable counterweight.

In exemplary embodiments, the storage unit may comprise a plurality of sub-units.

In exemplary embodiments, the plurality of sub-units may be configured to extend transversely across the chassis with respect to the longitudinal axis.

In exemplary embodiments, the plurality of hydrogen storage units may comprise a first sub-unit and a second sub-unit, wherein the first and second sub-units are stacked one above the other.

In exemplary embodiments, the first and second sub-units may be the rear-most sub-units.

In exemplary embodiments, the storage unit may comprise one or more pressurised tanks.

Advantageously, pressurised tanks provide a reliable and easy-to-implement means for storing hydrogen fuel aboard the working vehicle which is readily compatible with current hydrogen power generation systems.

In exemplary embodiments, the one or more pressurised tanks may be one or more elongate tanks.

In exemplary embodiments, the elongate tanks may extend transversely across the chassis with respective to the longitudinal axis.

In exemplary embodiments, the counterweight may comprise a metal casing filled with an aggregate material.

Advantageously, the aforementioned counterweight helps to further maximise the degree of protection afforded to the hydrogen storage unit.

In exemplary embodiments, the metal casing may comprise steel.

In exemplary embodiments, the aggregate material may comprise concrete.

Advantageously, the use of such materials helps to further maximise the degree of protection afforded to the hydrogen storage unit.

In exemplary embodiments, the working vehicle further comprises a first port provided towards a first side of the working vehicle with respect to the longitudinal axis, and a second port provided towards a second side of the working vehicle with respect to the longitudinal axis, wherein the first side is opposite the second side with respect to the longitudinal axis.

In exemplary embodiments, an airflow pathway may be defined between the first port and the second port, the airflow pathway extending laterally across the chassis of the working vehicle with respect to the longitudinal axis.

Advantageously, this provision enables the existing chassis and shroud design of a diesel-powered working vehicle to be re-purposed for a hydrogen excavator, thereby reducing associated manufacturing and construction costs, whilst still maintaining effective lateral airflow.

In exemplary embodiments, the first and/or second port is provided on a side of the working vehicle.

In exemplary embodiments, the first and/or second ports are substantially vertically orientated.

Advantageously, the substantially vertical orientation of the ports helps to prevent the ingress of rainwater during us in wet weather conditions.

In exemplary embodiments, the working vehicle further comprises a fan arrangement configured to control the direction of airflow along the airflow pathway between a first direction, wherein the first port acts as an intake and the second port acts as an exhaust, and a second direction, wherein the second port acts as an intake and the first port acts as an exhaust.

Advantageously, reversing the direction of airflow along the airflow pathway helps to remove dirt which can build up at the port acting as the inlet.

In exemplary embodiments, the hydrogen storage unit is arranged such that air passing along the airflow pathway acts on at least part of the hydrogen storage unit during use.

Advantageously, the airflow provided by the airflow pathway helps to keep the hydrogen within the storage unit within a desirable temperature range.

In exemplary embodiments, the chassis comprises a front, a rear, a first side and a second side, defining the or an internal volume therebetween.

In exemplary embodiments, the vehicle comprises an internal volume defined between the front and the rear of the chassis, and the airflow pathway extends across at least a portion of the internal volume such that air passing along the airflow pathway acts on at least some of the components housed within the internal volume during use.

In exemplary embodiments, the hydrogen fuel cell is housed within the internal volume and located proximal the second side of chassis, optionally towards the rear of the chassis.

In exemplary embodiments, the hydrogen fuel cell is located within the internal volume, and at least part of the hydrogen fuel cell is arranged such that air passing along the airflow pathway acts on at least part of the hydrogen fuel cell during use.

Advantageously, by positioning the hydrogen fuel cell in this manner, lateral airflow can be better maintained across the machine whilst using the existing chassis and shroud design of a diesel-powered excavator.

Furthermore, by housing hydrogen fuel cell within the space which would typically house the design engine in a traditional diesel-powered machine, the present disclosure is able to utilise the same chassis design as a stock diesel machine, thereby helping to further reduce the amount of re-design needed.

In exemplary embodiments, the hydrogen fuel cell is located on the second side of chassis.

In exemplary embodiments, the vehicle comprises a first cooling pack.

In exemplary embodiments, the vehicle comprises the or a first cooling pack housed within the internal volume and located proximal the first side of the chassis, optionally towards the rear of the chassis.

Advantageously, by positioning the first cooling pack in this manner, lateral airflow can be better maintained across the machine whilst using the existing chassis and shroud design of a diesel-powered excavator.

Furthermore, by housing first cooling pack within the space which would typically house the design engine in a traditional diesel-powered machine, the present disclosure is able to utilise the same chassis design as a stock diesel machine, thereby helping to further reduce the amount of re-design needed.

In exemplary embodiments, the first cooling pack is located on the first side of the chassis.

In exemplary embodiments, the working vehicle further comprises a second cooling pack.

In exemplary embodiments, the second cooling pack is located within the internal volume of the chassis, optionally wherein the second cooling pack is located towards the front of the chassis, optionally proximal the second side of the chassis.

Advantageously, by housing the second cooling pack within the existing space which would typically house the design engine in a traditional diesel-powered machine, the present disclosure is able to utilise the same chassis design as a stock diesel machine, thereby helping to further reduce the amount of re-design needed.

In exemplary embodiments, the second cooling pack is located on the second side of the chassis.

In exemplary embodiments, the working vehicle further comprises at least one energy storage device configured to power the working vehicle.

In exemplary embodiments, the at least one energy storage device is electrically connected to the hydrogen fuel cell.

In exemplary embodiments, the at least one energy storage device is located within the internal volume.

In exemplary embodiments, the at least one energy storage device is located proximal the second side of the chassis.

In exemplary embodiments, the at least one energy storage device and the hydrogen fuel cell are stacked one above the other.

In exemplary embodiments, the at least one energy storage device is a plurality of high voltage battery packs.

In exemplary embodiments, the at least one energy storage device is one or more capacitors.

Advantageously, by housing the plurality of at least one energy storage device within the existing space which would typically house the design engine in a traditional diesel-powered machine, the present disclosure is able to utilise the same chassis design as a stock diesel machine, thereby helping to further reduce the amount of re-design needed.

In exemplary embodiments, the second cooling pack is located proximal to the at least one energy storage device.

Advantageously, providing the second cooling pack proximal to the at least one energy storage device helps to provide more effective cooling to this component.

In exemplary embodiments, the hydrogen storage unit is located within the internal volume.

Advantageously, by housing the hydrogen storage unit within the existing space which would typically house the design engine in a traditional diesel-powered machine, the present disclosure is able to utilise the same chassis design as a stock diesel machine, thereby helping to further reduce the amount of re-design needed.

In exemplary embodiments, the working arm is hydraulically controlled.

In exemplary embodiments, the vehicle further comprises a hydraulic tank operably coupled to the working arm via a series of control valves.

In exemplary embodiments, the hydraulic tank is located on the first side of the chassis.

In exemplary embodiments, the hydraulic tank is housed within the internal volume and is located proximal the first side of the chassis, optionally wherein the hydraulic tank is located towards the front of the chassis.

In exemplary embodiments, the working vehicle further comprises a cab located proximal the first side of the chassis.

In exemplary embodiments, the hydraulic tank is located directly behind the cab.

Advantageously, mounting the hydraulic tank directly behind the cab helps to maximise the degree of protection afforded to the hydraulic tank within the working vehicle lay out.

In exemplary embodiments, the cab and the hydraulic tank are located on the first side of the chassis and the at least one energy storage device and the fuel tank are located on the second side of the chassis, opposite the first side.

In exemplary embodiments, the chassis comprises a width extending between the first side and the second side, and wherein the series of control valves are housed within the internal volume and located within a central third of the chassis width.

Advantageously, positioning the control valves in this manner (which is consistent with diesel powered working vehicles) helps to reduce the need for a chassis re-design.

In exemplary embodiments, the internal volume is substantially U-shaped.

In exemplary embodiments, the internal volume extends around the series of control valves from the first side of the chassis to the second side of the chassis.

Advantageously, by utilising the same layout as that of a traditional diesel machine, the working arm and control valves for the hydrogen-powered working vehicle can remain in the same positions as they would be in a traditional diesel-powered working vehicle thereby helping to further reduce the amount of re-design needed.

In exemplary embodiments, the vehicle comprises a slew motor for rotating the chassis.

In exemplary embodiments, the slew motor is an electric slew motor.

In exemplary embodiments, the slew motor is located between the working arm and the series of control valves.

In exemplary embodiments, the slew motor is housed within the internal volume, wherein the chassis comprises a width extending between the first side and the second side, and wherein the series of slew motor is located within a central third of the chassis width.

Advantageously, by utilising the same layout as that of a traditional diesel machine, the working arm and control valves for the hydrogen-powered working vehicle can remain in the same positions as they would be in a traditional diesel-powered working vehicle thereby helping to further reduce the amount of re-design needed.

In exemplary embodiments, the hydrogen-powered working vehicle is an excavator.

In exemplary embodiments, the excavator is a crawler excavator comprising tracks.

In exemplary embodiments, the excavator may comprise one or more wheels.

In exemplary embodiments, the excavator is a slew excavator.

In exemplary embodiments, the first side of the chassis is the port side of the working vehicle and the second side is the starboard side of the working vehicle.

According to a second aspect of the present disclosure, there is provided a hydrogen-powered working vehicle comprising a hydrogen fuel cell, a hydrogen storage unit for supplying hydrogen to the hydrogen fuel cell, a chassis and a working arm coupled to the chassis, wherein the working vehicle comprises a longitudinal axis, wherein the working vehicle further comprises a first port provided at a first side of the working vehicle with respect to the longitudinal axis, and a second port provided at a second side of the working vehicle with respect to the longitudinal axis, wherein the first side is opposite the second side with respect to the longitudinal axis, and wherein an airflow pathway is defined between the first port and the second port and extends laterally across the chassis of the working vehicle with respect to the longitudinal axis.

Advantageously, this provision enables the existing chassis and shroud design of a diesel-powered working vehicle to be re-purposed for a hydrogen excavator, thereby reducing associated manufacturing and construction costs, whilst still providing effective lateral airflow.

In exemplary embodiments, the first and/or second port is provided on a side of the working vehicle.

In exemplary embodiments, the first and/or second ports are substantially vertically orientated.

Advantageously, the substantially vertical orientation of the ports helps to prevent the ingress of rainwater during us in wet weather conditions.

In exemplary embodiments, the working vehicle further comprises a fan arrangement configured to control the direction of airflow along the airflow pathway between a first direction, wherein the first port acts as an intake and the second port acts as an exhaust, and a second direction, wherein the second port acts as an intake and the first port acts as an exhaust.

Advantageously, reversing the direction of airflow along the airflow pathway helps to remove dirt which can build up at the port acting as the inlet.

In exemplary embodiments, the working vehicle comprises a counterweight located proximal a rear of the chassis for counter-balancing the working arm.

In exemplary embodiments, the hydrogen storage unit is located inboard of the counterweight.

In other words, the storage unit is provided as a separate component to the counterweight.

Advantageously, by locating the hydrogen storage unit inboard of the counterweight, the hydrogen storage unit is at a position of maximum protection within the excavator, thereby reducing the susceptibility of this component to damage during use.

In exemplary embodiments, the longitudinal axis intersects at least a portion of the hydrogen storage unit.

Advantageously, by positioning the hydrogen storage unit centrally within the chassis of the vehicle, the susceptibility of the hydrogen storage unit to damage can be further reduced since it is more common for collisions to occur at the corner portions of the excavator chassis.

In exemplary embodiments the hydrogen storage unit extends transversely across the chassis with respect to the longitudinal axis.

Advantageously, positioning the hydrogen storage unit transversely across the chassis helps to maximise the space available within the chassis.

In exemplary embodiments, the hydrogen storage unit is provided proximal to a rear of the chassis.

Advantageously, positioning the hydrogen storage unit at the rear of the chassis helps to further maximise the degree of protection afforded to this component, since the hydrogen storage unit will be provided in close proximity to the durable counterweight.

In exemplary embodiments, the storage unit may comprise a plurality of sub-units.

In exemplary embodiments, the plurality of sub-units may be configured to extend transversely across the chassis with respect to the longitudinal axis.

In exemplary embodiments, the plurality of hydrogen storage units may comprise a first sub-unit and a second sub-unit, wherein the first and second sub-units are stacked one above the other.

In exemplary embodiments, the first and second sub-units may be the rear-most sub-units.

In exemplary embodiments, the storage unit may comprise one or more pressurised tanks.

Advantageously, pressurised tanks provide a reliable and easy-to-implement means for storing hydrogen fuel aboard the working vehicle which is readily compatible with current hydrogen power generation systems.

In exemplary embodiments, the one or more pressurised tanks may be one or more elongate tanks.

In exemplary embodiments, the elongate tanks may extend transversely across the chassis with respective to the longitudinal axis.

In exemplary embodiments, the counterweight may comprise a metal casing filled with an aggregate material.

Advantageously, the aforementioned counterweight helps to further maximise the degree of protection afforded to the hydrogen storage unit.

In exemplary embodiments, the metal casing may comprise steel.

In exemplary embodiments, the aggregate material may comprise concrete.

Advantageously, the use of such materials helps to further maximise the degree of protection afforded to the hydrogen storage unit.

In exemplary embodiments, the hydrogen storage unit is arranged such that air passing along the airflow pathway acts on at least part of the hydrogen storage unit during use.

Advantageously, the lateral airflow provided by the airflow pathway helps to keep the hydrogen within the storage unit within a desirable temperature range.

In exemplary embodiments, the chassis comprises a front, a rear, a first side and a second side, defining the or an internal volume therebetween.

In exemplary embodiments, the vehicle comprises an internal volume defined between the front and the rear of the chassis, and the airflow pathway extends across at least a portion of the internal volume such that air passing along the airflow pathway acts on at least some of the components housed within the internal volume during use.

In exemplary embodiments, the hydrogen fuel cell is housed within the internal volume and located proximal the second side of chassis, optionally towards the rear of the chassis.

In exemplary embodiments, the hydrogen fuel cell is located within the internal volume, and at least part of the hydrogen fuel cell is arranged such that air passing along the airflow pathway acts on at least part of the hydrogen fuel cell during use.

Advantageously, by positioning the hydrogen fuel cell in this manner, lateral airflow can be better maintained across the machine whilst using the existing chassis and shroud design of a diesel-powered excavator.

Furthermore, by housing hydrogen fuel cell within the space which would typically house the design engine in a traditional diesel-powered machine, the present disclosure is able to utilise the same chassis design as a stock diesel machine, thereby helping to further reduce the amount of re-design needed.

In exemplary embodiments, the hydrogen fuel cell is located on the second side of chassis.

In exemplary embodiments, the vehicle further comprises a first cooling pack.

In exemplary embodiments, the vehicle comprises a first cooling pack housed within the internal volume and located proximal the first side of the chassis, optionally towards the rear of the chassis.

Advantageously, by positioning the first cooling pack in this manner, lateral airflow can be better maintained across the machine whilst using the existing chassis and shroud design of a diesel-powered excavator.

Furthermore, by housing first cooling pack within the space which would typically house the design engine in a traditional diesel-powered machine, the present disclosure is able to utilise the same chassis design as a stock diesel machine, thereby helping to further reduce the amount of re-design needed.

In exemplary embodiments, the first cooling pack is located on the first side of the chassis.

In exemplary embodiments, the working vehicle further comprises a second cooling pack.

In exemplary embodiments, the second cooling pack is located within the internal volume of the chassis, optionally wherein the second cooling pack is located towards the front of the chassis, optionally proximal the second side of the chassis.

Advantageously, by housing the second cooling pack within the existing space which would typically house the design engine in a traditional diesel-powered machine, the present disclosure is able to utilise the same chassis design as a stock diesel machine, thereby helping to further reduce the amount of re-design needed.

In exemplary embodiments, the second cooling pack is located on the second side of the chassis.

In exemplary embodiments, the working vehicle further comprises at least one energy storage device configured to power the working vehicle.

In exemplary embodiments, the at least one energy storage device is electrically connected to the hydrogen fuel cell.

In exemplary embodiments, the at least one energy storage device is located within the internal volume.

In exemplary embodiments, the at least one energy storage device is located proximal the second side of the chassis.

In exemplary embodiments, the at least one energy storage device and the hydrogen fuel cell are stacked one above the other.

In exemplary embodiments, the at least one energy storage device is a plurality of high voltage battery packs.

In exemplary embodiments, the at least one energy storage device is one or more capacitors.

Advantageously, by housing the plurality of at least one energy storage device within the existing space which would typically house the design engine in a traditional diesel-powered machine, the present disclosure is able to utilise the same chassis design as a stock diesel machine, thereby helping to further reduce the amount of re-design needed.

In exemplary embodiments, the second cooling pack is located proximal to the at least one energy storage device.

Advantageously, providing the second cooling pack proximal to the at least one energy storage device helps to provide more effective cooling to this component.

In exemplary embodiments, the hydrogen storage unit is located within the internal volume.

Advantageously, by housing the hydrogen storage unit within the existing space which would typically house the design engine in a traditional diesel-powered machine, the present disclosure is able to utilise the same chassis design as a stock diesel machine, thereby helping to further reduce the amount of re-design needed.

In exemplary embodiments, the working arm is hydraulically controlled.

In exemplary embodiments, the vehicle further comprises a hydraulic tank operably coupled to the working arm via a series of control valves.

In exemplary embodiments, the hydraulic tank is located on the first side of the chassis.

In exemplary embodiments, the hydraulic tank is housed within the internal volume and is located proximal the first side of the chassis, optionally wherein the hydraulic tank is located towards the front of the chassis.

In exemplary embodiments, the working vehicle further comprises a cab located proximal the first side of the chassis.

In exemplary embodiments, the hydraulic tank is located directly behind the cab.

Advantageously, mounting the hydraulic tank directly behind the cab helps to maximise the degree of protection afforded to the hydraulic tank within the working vehicle lay out.

In exemplary embodiments, the cab and the hydraulic tank are located on the first side of the chassis and the at least one energy storage device and the fuel tank are located on the second side of the chassis, opposite the first side.

In exemplary embodiments, the chassis comprises a width extending between the first side and the second side, and wherein the series of control valves are housed within the internal volume and located within a central third of the chassis width.

Advantageously, positioning the control valves in this manner (which is consistent with diesel powered working vehicles) helps to reduce the need for a chassis re-design.

In exemplary embodiments, the internal volume is substantially U-shaped.

In exemplary embodiments, the internal volume extends around the series of control valves from the first side of the chassis to the second side of the chassis.

Advantageously, by utilising the same layout as that of a traditional diesel machine, the working arm and control valves for the hydrogen-powered working vehicle can remain in the same positions as they would be in a traditional diesel-powered working vehicle thereby helping to further reduce the amount of re-design needed.

In exemplary embodiments, the vehicle comprises a slew motor for rotating the chassis.

In exemplary embodiments, the slew motor is an electric slew motor.

In exemplary embodiments, the slew motor is located between the working arm and the series of control valves.

In exemplary embodiments, the slew motor is housed within the internal volume, wherein the chassis comprises a width extending between the first side and the second side, and wherein the series of slew motor is located within a central third of the chassis width.

Advantageously, by utilising the same layout as that of a traditional diesel machine, the working arm and control valves for the hydrogen-powered working vehicle can remain in the same positions as they would be in a traditional diesel-powered working vehicle thereby helping to further reduce the amount of re-design needed.

In exemplary embodiments, the hydrogen-powered working vehicle is an excavator.

In exemplary embodiments, the excavator is a crawler excavator comprising tracks.

In exemplary embodiments, the excavator may comprise one or more wheels.

In exemplary embodiments, the excavator is a slew excavator.

In exemplary embodiments, the first side of the chassis is the port side of the working vehicle and the second side is the starboard side of the working vehicle.

In exemplary embodiments, the hydrogen storage unit is positioned in front of the counterweight.

In exemplary embodiments, the hydrogen storage unit is located within the internal volume of the chassis.

In exemplary embodiments, the hydrogen storage unit is located within the internal volume of the chassis towards the rear of the chassis.

In exemplary embodiments, the counterweight has a volume and the hydrogen storage unit is positioned outside of the volume of the counterweight.

In exemplary embodiments, the counterweight comprises a front end and a rear end, and the hydrogen storage unit is positioned inboard of the front end of the counterweight.

In exemplary embodiments, the entirety of the counterweight is positioned between the hydrogen storage unit and a rearmost part of the chassis.

### BRIEF DESCRIPTION OF THE DRAWINGS

The present disclosure will now be described, by way of example only, with reference to the following figures in which:
Figure 1 is a perspective view showing a first side of a working vehicle according to an embodiment of the present disclosure;
Figure 2 is a perspective view showing a second side of the working vehicle illustrated in Figure 1;
Figure 3 is a plan view of the working vehicle illustrated in Figures 1 and 2, in which the internal volume of the chassis has been highlighted;
Figure 4 is another plan view showing the working vehicle illustrated in Figures 1 to 3;
Figure 5 is a side view showing the first side of the working vehicle illustrated in Figures 1 to 4;
Figure 6 is a side view showing the second side of the working vehicle illustrated in Figures 1 to 5;
Figure 7 is a side view showing the first port on the first side of the working vehicle illustrated in Figures 1 to 6;
Figure 8 is a perspective view showing the second port on the second side of the working vehicle illustrated in Figures 1 to 7;
Figure 9 is another plan view showing the airflow pathway across the chassis of the working vehicle illustrated in Figures 1 to 8; and
Figure 10 is a perspective view showing a fan arrangement located at the first port of the working vehicle illustrated in Figures 1 to 9.

### DETAILED DESCRIPTION

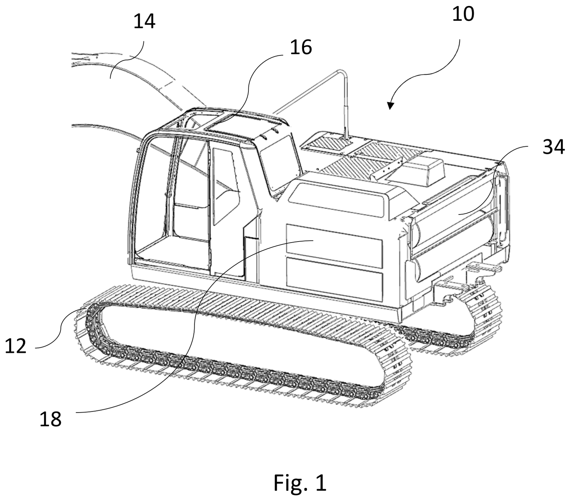

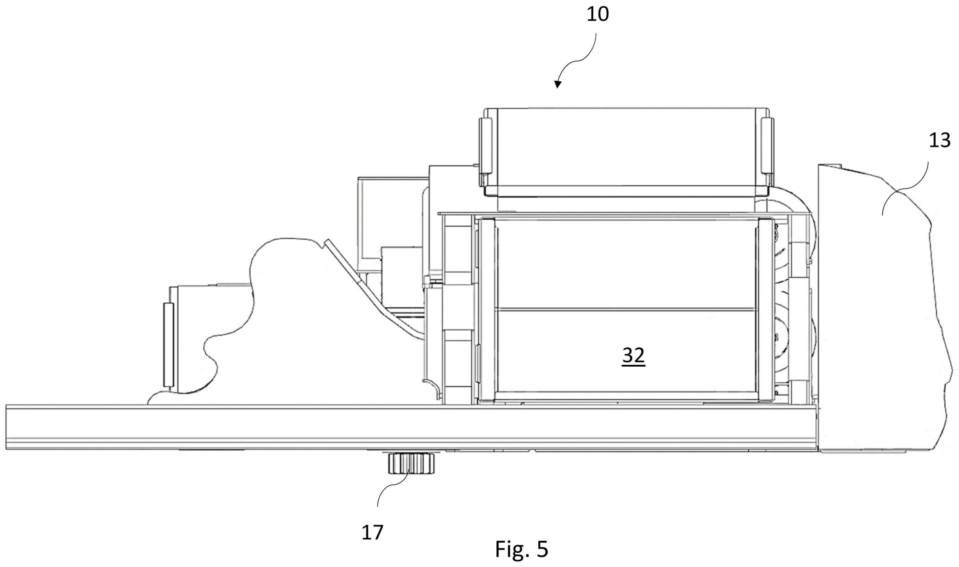

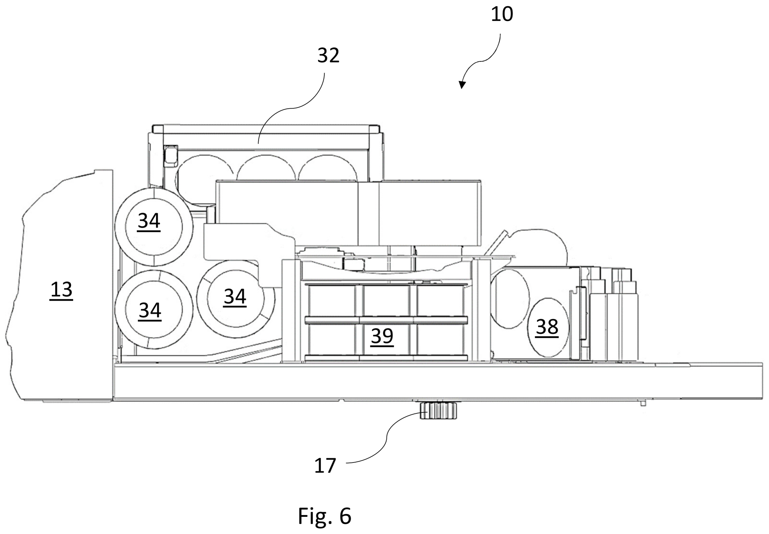

Referring to Figures 1 to 9, a hydrogen-powered working vehicle according to an embodiment of the present disclosure is indicated at 10.

A working vehicle is an off-highway vehicle, for example those used in construction industries (e.g., backhoe loaders, excavators, slew excavators, telescopic handlers, forklifts, skid-steer loaders, dump trucks, bulldozers, graders), agricultural industries (e.g., tractors, combine harvesters, self-propelled harvesters, and sprayers), quarrying (e.g., loading shovels, aggregate crushing equipment), and forestry (e.g., timber harvesters, feller bunchers).

In the illustrated embodiment, the working vehicle 10 is a crawler excavator having a chassis 20 and a ground engaging transport means in the form of a pair of tracks 12 provided on the chassis 20 to move the vehicle 10 over the ground. However, in alternative embodiments, other ground engaging means can be provided, for example wheels may be provided to move the working vehicle 10, instead of tracks 12.

An arm assembly is coupled to the chassis 20 and includes a working arm 14 which is pivotally coupled to the chassis 20.

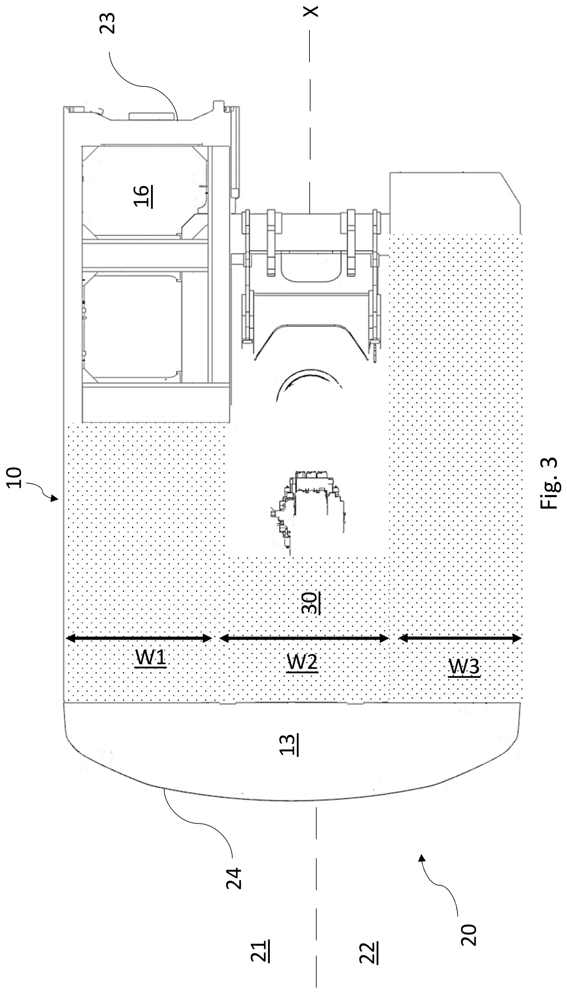

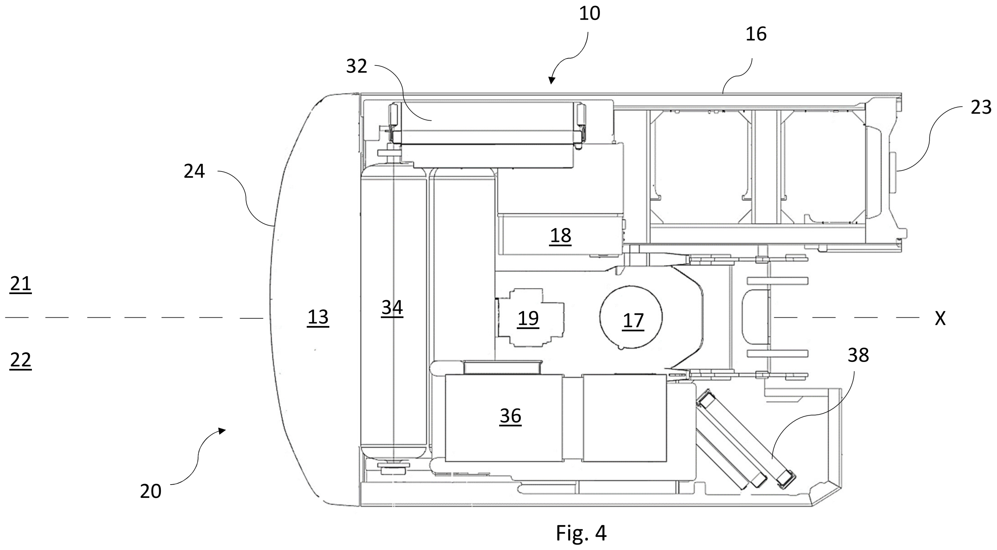

The chassis 20 has a first side 21, a second side 22, a front 23 and a rear 24. A longitudinal axis X of the working vehicle 10 passes through a centre of the chassis 20. In the illustrated embodiment, the first side 21 of the working vehicle 10 is defined as a port side of the working vehicle 10 (shown on the left of the longitudinal axis X in Figures 3 and 4). The second side 22 of the working vehicle 10 is a starboard side of the working vehicle 10 (shown on the right of the longitudinal axis X in Figures 3 and 4). However, it shall be appreciated that in alternative embodiments, components depicted on the first side 21 of the working vehicle 10 may be provided on the second side 22 of the working vehicle 10 and vice versa. In other words, the layout of the working vehicle 10 may be inverted in alternative embodiments.

The chassis 20 also has a width W which extends between the first 21 and second 22 sides of the working vehicle. The width W can be divided up into three thirds W1, W2 and W3, as is shown in Figure 3. The first third W1 is provided proximal the first side 21 of the working vehicle 10, the third third W3 is provided proximal the second side 22 of the working vehicle 10 and the second third W2 is a central third, located between the first and third thirds respectively.

A working arm 14 is attached to the front 23 of the chassis 20. In the illustrated embodiment, the working arm 14 is centrally positioned. In other words, the working arm 14 is mounted to the chassis 20 within the second third W2 of the chassis width W, as is shown in Figure 3. However, in alternative embodiments, the working arm 14 may be mounted to the chassis 20 proximal the first 21 or second sides 22 of the working vehicle.

The working vehicle 10 also includes a cab 16 with a collection of controls (not shown) for moving the working arm 14, manoeuvring the working vehicle 10 and/or controlling other functions of the working vehicle 10. As shown in Figure 3, the cab 16 is provided proximal the first side 21 of the chassis 20. As shown in Figure 3, the cab 16 is provided next to the working arm 14.

The working arm 14 includes a boom (not shown) pivotally attached to the front of the chassis 20. The working arm 14 also includes a dipper arm (not shown) pivotally attached to the boom and an implement (not shown) pivotally attached to the dipper arm (i.e., connected to a free end of the working arm 14). In some embodiments, the implement may be a bucket, which is used for soil-shifting or materials handling operations (e.g., trenching, grading, and loading) and/or materials handling (e.g., depositing aggregate in trenches, lifting materials, and placing them on an elevated platform).

In alternative embodiments, an alternative implement may be used, such as a hydraulic hammer drill. A hydraulic hammer drill includes a drill bit configured for reciprocating movement under the action of pressurized hydraulic fluid (e.g., hydraulic fluid supplied via an auxiliary hose of a hydraulic system of the working vehicle 10). Such a hydraulic hammer drill is typically used for breaking apart materials (e.g., a concrete/tarmac road surface).

Furthermore, in some embodiments, the working arm may be a triple-articulated boom (or TAB boom) comprising a boom (not shown) and a plurality of dipper arm sections (not shown) pivotally attached between the boom (not shown) and the implement (not shown). Advantageously, the use of a TAB boom can help to improve the flexibility and versatility of the working arm.

A boom actuator (not shown) is provided to move the boom in an ascending direction and a descending direction. The boom actuator is provided in the form of a boom actuator body defining a bore (not shown), a piston (not shown) configured for reciprocating movement within the bore, and a rod (not shown) connected to the piston and extending through the boom actuator body. The working vehicle 10 also includes a dipper actuator (not shown) similar to the boom actuator, for pivoting the dipper arm with respect to the boom, and an implement actuator similar to the boom actuator, for pivoting the implement with respect to the dipper arm.

The working vehicle 10 also includes a hydraulic system for controlling the boom actuator, dipper actuator, bucket actuator and other hydraulic functions of the working vehicle 10.

The hydraulic system has a hydraulic tank 18 which is operably connected to the working arm 14 via a series of control valves 19. The control valves are controllable by a user via the controls located in the cab 16 to provide hydraulic fluid to the respective actuators of the working arm 14.

In the illustrated embodiment, the hydraulic tank 18 is mounted proximal the first side 21 of the chassis 20, directly behind the cab 16. Mounting the hydraulic tank 18 in this position helps to maximise the degree of protection afforded to the hydraulic tank 18 within the working vehicle lay out. However, it shall be appreciated that in other embodiments, the hydraulic tank may be mounted in a different position.

The control valves 19 are positioned at a central position within the chassis 20. As is shown in Figure 4, the control valves are located within the second third W2 of the chassis width W. As can also be seen in Figure 4, in the illustrated embodiment the control valves 19 are positioned next to the hydraulic tank (which is provided on the first side 21 of the chassis 20) and directly behind the working arm 14. Providing the control valves 19 in this position helps to reduce the length of conduit required to transport the hydraulic fluid between the tank 18 and the working arm 14 and helps to keep the layout of the working vehicle consistent with that of a diesel-powered working vehicle, thereby reducing the amount of re-design work required when designing the chassis of the hydrogen-powered working vehicle 10.

In the illustrated embodiment, the working machine 10 is a slew excavator. Thus, the working vehicle 10 has an electric slew motor 17 located centrally within the chassis 20 to rotate the chassis 20 with respect to the tracks 12. As can be seen in Figure 3, the electric slew motor is positioned along the longitudinal axis X of the chassis within the central third W2 of the chassis width W. As can also be seen in Figure 4, the electric slew motor 17 is provided between the working arm 14 and the control valves 19.

Positioning the slew motor 17 in this manner helps to further keep the layout of the working vehicle consistent with that of a diesel-powered working vehicle, thereby reducing the amount of re-design work required when designing the chassis of the hydrogen-powered working vehicle 10.

However, it shall be appreciated that in alternative embodiments, different configurations and lay-outs may be used. Furthermore, in some embodiments, the working vehicle may be a different kind of excavator or a different type of working vehicle entirely and so the slew motor may be omitted.

To counterbalance the weight of the working arm 14, a counterweight 13 is provided at the rear of the chassis 20. As shown in Figure 4, the counterweight 13 spans laterally across the entire rear 24 of the chassis 20 and conforms to the shape of the working vehicle 10. In the illustrated embodiment, the counterweight 13 comprises a metal casing (typically steel) filled with an aggregate material (typically concrete). However, in alternative embodiments, alternative types of counterweight may be used.

The chassis 20 defines an internal volume 30 between the front 23 and the rear 24 of the chassis. In equivalent diesel-powered machines, the internal volume of the chassis would ordinarily house the engine.

The internal volume 30 houses various components required for a hydrogen powered vehicle. These may include a first cooling pack 32, a hydrogen storage unit 34, a hydrogen fuel cell 36, a second cooling pack 38 and a plurality of energy storage devices (e.g., high voltage battery packs 39 or capacitors).

The hydrogen storage unit 34 stores hydrogen fuel which is supplied to the hydrogen fuel cell 36 via one or more conduits (not shown) during operation of the working vehicle 10.

The hydrogen storage unit 34 is positioned within the internal volume 30 proximal the rear 24 of the chassis 20 and inboard (i.e., in front of) of the counterweight 13. As can be seen in Figure 4, in the illustrated embodiment, the hydrogen storage unit 34 is positioned generally centrally with respect to the chassis 20 such that the longitudinal axis X of the chassis 20 intersects at least a portion of the hydrogen storage unit 34.

Advantageously, by positioning the hydrogen storage unit 34 in a rear and central position, inboard of the counterweight 13, the hydrogen storage unit 34 is afforded high levels of protection from damage from the counterweight and is positioned away from corner portions of the chassis 20 which are susceptible to contact during use. As such, positioning the hydrogen storage unit 34 in this manner helps to reduce the susceptibility of this component to damage.

In the illustrated embodiment, the hydrogen storage unit 34 comprises a plurality of sub-units, the plurality of sub-units in this case comprising a plurality of elongate pressurised tanks which extend transversely across the rear 24 of the chassis 20 with respect to the longitudinal axis X, inboard of the counterweight 13.

As can be seen in Figure 1, the hydrogen storage unit comprises a first sub-unit and a second sub-unit which are stacked one above the other. In the illustrated embodiment, the first and second sub-units are the rear-most sub-units.

Advantageously, positioning the hydrogen storage unit 34 in this way helps to maximise the available space within the chassis 20. Furthermore, pressurised tanks provide a reliable and easy-to-implement means for storing hydrogen fuel which is readily compatible with current hydrogen power generation systems.

A further third sub-unit is also provided proximal a rear of the chassis, inboard (i.e., in front of) the counterweight and inboard (i.e., in front of) the first and second sub-units.

However, it shall be appreciated that in other embodiments, other types of hydrogen storage unit 34 may be used and that said hydrogen storage units may be housed in different locations and/or orientations to those which are set out in the illustrated embodiment.

The hydrogen fuel cell 36 comprises an anode (not shown) and a cathode (not shown). During use, hydrogen fuel from the hydrogen storage unit 34 is supplied to the anode of the hydrogen fuel cell 36 and air (or another suitable substance) is supplied to the cathode via a suitable intake (not shown). The flow of electricity generated by the fuel cell can be subsequently used to power various components of the working vehicle 10 and/or can be passed to the energy storage device via a suitable conduit (not shown) to be used to power components of the working vehicle at a later date.

The means by which a hydrogen fuel cell 36 generates electricity is well known in the art and is not central to the concept of the present disclosure. As such, for conciseness, the operation of the hydrogen fuel cell will not be discussed in detail.

In the illustrated embodiment, the hydrogen fuel cell 36 is located within the internal volume 30 on the second side 22 of the chassis 20. In the illustrated embodiment, the energy storage device is also located within the internal volume 30 on the second side 22 of the chassis 20. This helps to reduce the amount and length of cabling required to transfer electricity from the hydrogen fuel cell 36 to the energy storage device.

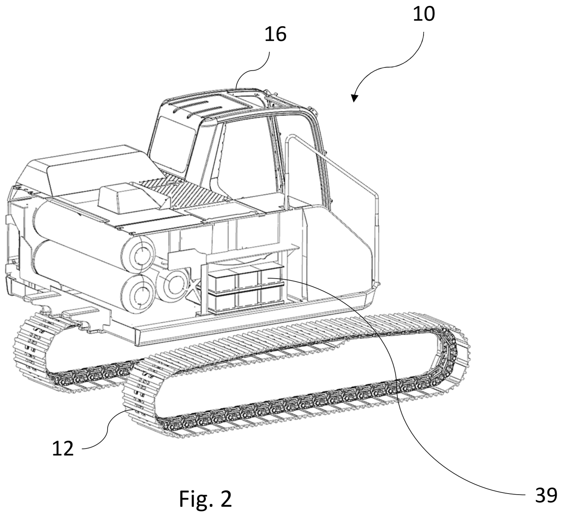

In the illustrated embodiment, and as shown in Figure 2, the energy storage device and the hydrogen fuel cell 36 are stacked one above the other with the energy storage device being provided below the hydrogen fuel cell 36.

However, it shall be appreciated that in other embodiments, the hydrogen fuel cell 36 and/or the energy storage device may be provided at other positions on the chassis 20.

In order to provide lateral airflow across the internal volume 30 of the chassis 20, the working vehicle 10 is provided with a pair of ports 42, 44 which each permit fluid communication between the external atmosphere and the internal volume 30 of the chassis 20.

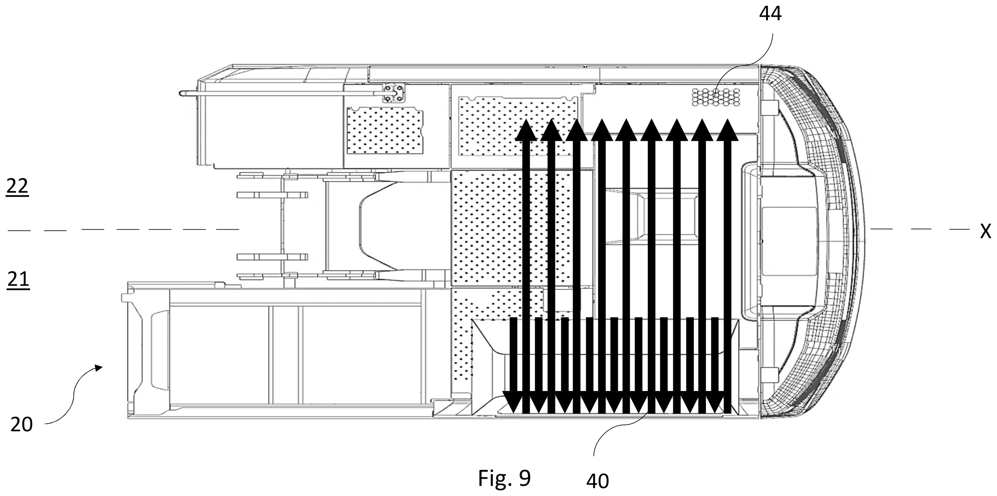

A first port 42 is provided towards the first side 21 of the working vehicle 10 with respect to the longitudinal axis X. A second port 44 is provided towards a second side 22 of the working vehicle 10 with respect to the longitudinal axis X. An airflow pathway 40 is defined across the internal volume 30 of the chassis 20 between the first 42 and second 44 ports (see Figure 9).

As shown in Figure 9, the airflow pathway 40 extends laterally across the rear of the internal volume 30 of the chassis 20, and thereby allows air passing along the airflow pathway to act on the components housed therein. This configuration remains consistent with the lateral airflow utilised by traditional diesel-powered working vehicles. Advantageously, by arranging the lay-out of the hydrogen working vehicle in this manner, the existing lateral airflow utilised by diesel-powered working vehicles can be effectively re-purposed for components of the hydrogen-power generation system. This helps to reduce manufacturing and design costs, since re-design of major components (like the chassis and shroud) can be avoided whilst still maintaining effective lateral airflow.

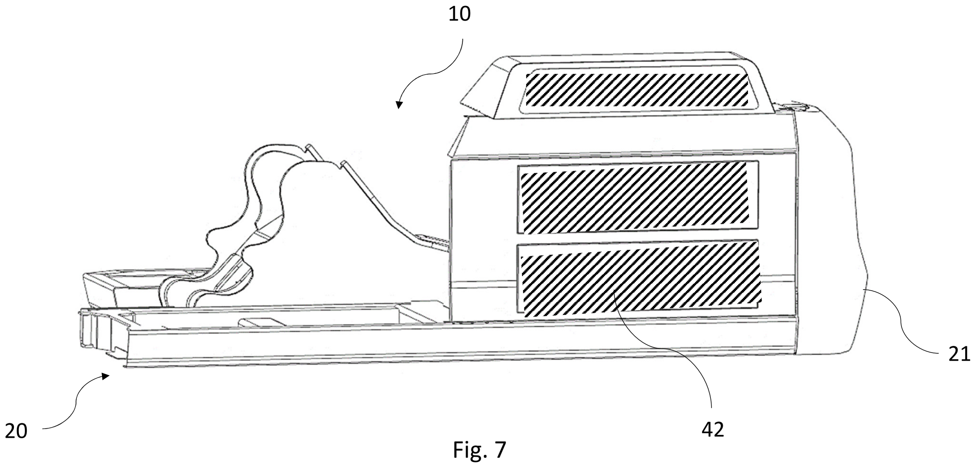

In the illustrated embodiment, the first port 42 has a substantially vertical orientation and is provided on a side of the working vehicle 10 (see Figure 7). The orientation of the port helps to avoid the ingress of rainwater during use in wet weather conditions.

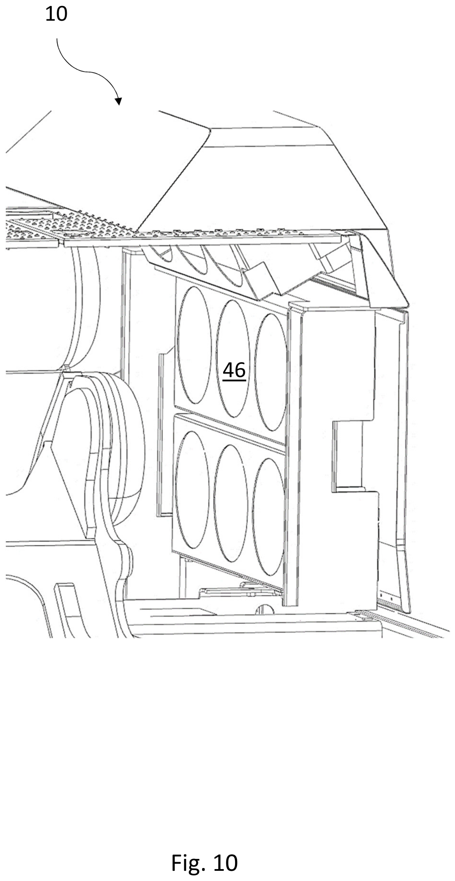

In the illustrated embodiment, a fan arrangement (in this case a plurality of fans 46) is also provided within the chassis 20 on the first side 21 of the working vehicle 10, proximal to the first port 42 (see Figure 10).

The fan arrangement is configured to control the direction of airflow along the airflow pathway 40 between a first direction, wherein the first port 42 acts as an intake and the second port 44 acts as an exhaust, and a second direction wherein the second port 44 acts as an intake and the first port 42 acts as an exhaust.

In some embodiments, the fans of the fan arrangement may be driven via a DC electric motor such that the fans can be controlled to rotate in either a clockwise or an anticlockwise direction (for example via inverting the polarity of the voltage applied to the DC motor). In some embodiments, the fan arrangement may also be configured to perform either a sucking or a blowing action dependent on the direction of rotation of the fans, thereby enabling the direction of airflow along the airflow pathway 40 to be reversed depending on the direction of rotation of the fans. In some embodiments, the fan arrangement may comprise a single fan.

However, it shall be appreciated that in other embodiments, dedicated sucking and/or blowing fans may be provided within the fan arrangement which can be activated or deactivated depending on the desired airflow direction to be achieved along the airflow pathway 40. Advantageously, reversing the direction of airflow helps to remove dirt which typically accumulates at the port acting as the intake.

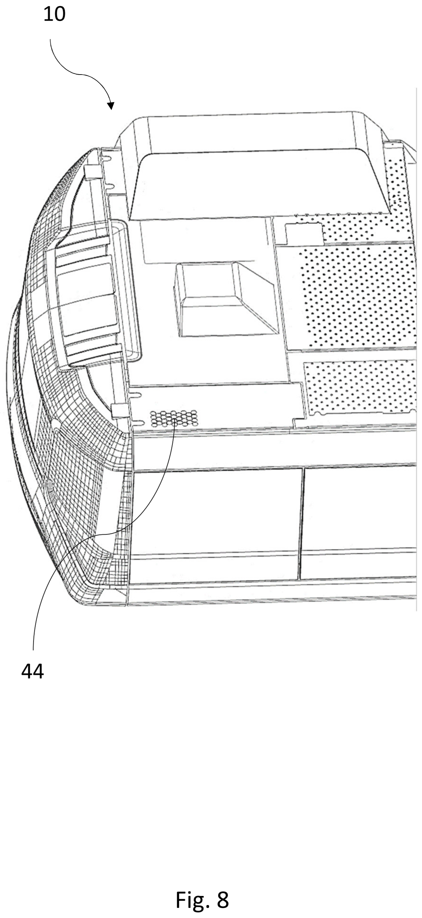

In the illustrated embodiment, the second port 44 is provided through a roof-portion of the chassis 20 on the second side 22 of the working vehicle (see Figure 8). However, in other embodiments, the second port 44 may also have a substantially vertical orientation and be provided on a side of the working vehicle 10.

In the illustrated embodiment, the fan arrangement is provided at the first port only. However, in other embodiments, it shall be appreciated that the fan arrangement may instead be provided at the second port, multiple fan arrangements may be provided, one at each port. Furthermore, in other embodiments, airflow may be allowed to pass naturally between the first and second ports and hence the fan arrangement(s) may be omitted.

Furthermore, whilst the illustrated embodiment is designed to provide effective cooling to components housed within the internal volume 30 of the chassis 20, in other embodiments, air passing along the airflow pathway may impart a heating effect onto the components housed within the internal volume 30 of the chassis 20. Such embodiments are particularly desirable for working vehicles intended for use in cooler climates.

A first cooling pack 32 is also provided within the internal volume 30 of the chassis 20 to further cool the components of the hydrogen-power generation system housed therein. As shown in Figure 4, the first cooling pack is provided proximal the first side 21 of the chassis 20.

A second cooling pack 38 is also provided proximal to the energy storage device to help prevent it from overheating during use. As such, in the illustrated embodiment, the second cooling pack is provided within the internal volume 30 on the second side 22 of the chassis 20.

The first 32 and second 38 cooling packs each comprise a number of cooling elements which are configured to cool the various components contained within the chassis (such as the hydrogen fuel cell 36 or the energy storage device). However, it shall be appreciated that the number of cooling packs (and associated cooling elements) contained within the chassis may be optionally selected dependent on the specification of the components of the hydrogen-power generation system in a given working vehicle.

For example, in some embodiments the second cooling pack 38 may be omitted with all cooling elements being packaged into a single cooling pack 32. In other embodiments, three or more cooling packs may be required in order to achieve optimal cooling of components within the internal volume 30. It is also envisaged that in some embodiments the lateral airflow provided by the first and second ports alone may be enough to achieve adequate cooling of the components of the hydrogen-power generation system and hence the first and second cooling packs may be omitted.

Although the disclosure has been described in relation to one or more embodiments, it will be appreciated that various changes or modifications can be made without departing from the scope of the disclosure as defined in the appended claims. For example:
It should also be noted that whilst the appended claims set out particular combinations of features described above, the scope of the present disclosure is not limited to the particular combinations hereafter claimed, but instead extends to encompass any combination of features herein disclosed.

## Claims

1. A hydrogen-powered working vehicle comprising:
a hydrogen fuel cell;
a hydrogen storage unit for supplying hydrogen to the hydrogen fuel cell;
a chassis; and
a working arm coupled to the chassis;
wherein the working vehicle comprises a longitudinal axis, wherein the working vehicle further comprises a first port provided at a first side of the working vehicle with respect to the longitudinal axis, and a second port provided at a second side of the working vehicle with respect to the longitudinal axis, wherein the first side is opposite the second side with respect to the longitudinal axis,
wherein an airflow pathway is defined between the first port and the second port and extends laterally across the chassis of the working vehicle with respect to the longitudinal axis, and
wherein the working vehicle further comprises a fan arrangement configured to control the direction of airflow along the airflow pathway between a first direction, wherein the first port acts as an intake and the second port acts as an exhaust, and a second direction, wherein the second port acts as an intake and the first port acts as an exhaust.

2. The vehicle according to claim 1, wherein the hydrogen storage unit is arranged such that air passing along the airflow pathway acts on at least part of the hydrogen storage unit during use.

3. The vehicle according to claim 1 or 2, wherein the hydrogen fuel cell is arranged such that air passing along the airflow pathway acts on at least part of the hydrogen fuel cell during use.

4. The vehicle of any preceding claim, wherein the first and/or second port is provided on a side of the excavator

5. The vehicle of any preceding claim, wherein the first and/or second ports are substantially vertically orientated.

6. The vehicle of any preceding claim, wherein the chassis defines an internal volume, and wherein the airflow pathway extends across at least a portion of the internal volume of the chassis such that air passing along the airflow pathway acts on at least some of the components housed within the internal volume during use.

7. The vehicle of claim 6, wherein the chassis comprises a front, a rear, a first side and a second side, defining the internal volume therebetween.

8. The vehicle of claim 7, further comprising at least one energy storage device located within the internal volume, optionally wherein the energy storage device and the hydrogen fuel cell are stacked one above the other, and further optionally wherein the energy storage device is located proximal the second side of the chassis.

9. The vehicle of claim 7 or 8, further comprising a first cooling pack housed within the internal volume and located proximal the first side of the chassis, optionally towards the rear of the chassis.

10. The vehicle of any of claims 7 to 9, further comprising a second cooling pack housed within the internal volume and located proximal the second side of the chassis, optionally towards the front of the chassis.

11. The vehicle of any preceding claim, wherein the chassis comprises a front, a rear, a first side and a second side, defining the or an internal volume therebetween, wherein the working arm is hydraulically controlled, wherein the vehicle further comprises a hydraulic tank operably coupled to the working arm via a series of control valves, and wherein the hydraulic tank is housed within the internal volume and is located proximal the first side of the chassis, and optionally wherein the hydraulic tank is located towards the front of the chassis.

12. The vehicle according to claim 11, wherein the working vehicle further comprises a cab located proximal the first side of the chassis, optionally wherein the hydraulic tank is located directly behind the cab.

13. The vehicle according to claim 11 or 12, wherein the chassis comprises a width extending between the first side and the second side, and wherein the series of control valves are housed within the internal volume and located within a central third of the chassis width.

14. The vehicle according to any preceding claim, further comprising a slew motor for rotating the chassis, optionally wherein the slew motor is an electric slew motor, and further optionally wherein the slew motor is housed within the internal volume, the chassis comprises a width extending between the first side and the second side, and the slew motor is located within a central third of the chassis width.

15. The vehicle according to any preceding claim, wherein the hydrogen-powered working vehicle is an excavator, and optionally wherein the excavator is a crawler excavator comprising tracks.
